# FASCICULE DE BREVET EUROPEEN

(11) **EP 2 225 901 B1**
(45) Date de publication et mention de la délivrance du brevet: **01.02.2012**
(21) Numéro de dépôt: 08856968.6
(22) Date de dépôt: 05.12.2008
(51) Int. Cl.: H04W 28/02

(54) **TRANSPORT DE DONNEES PRIORITAIRES DANS UN RESEAU AD-HOC**
PRIORITÄTSDATENTRANSPORT IN EINEM AD-HOC NETZ
TRANSPORT OF PRIORITY DATA IN AN AD-HOC NETWORK

(30) Priorité: 07.12.2007 FR 0708547
(43) Date de publication de la demande: 08.09.2010
(73) Titulaire: THALES, 92200 Neuilly-sur-Seine (FR)
(72) Inventeur: LEGUAY, Jérémie, F-75014 Paris (FR); CONAN, Vania, F-75005 Paris (FR)
(74) Mandataire: Dudouit, Isabelle
(86) Numéro de dépôt international: PCT/EP2008/066932
(87) Numéro de publication internationale: WO 2009/071688

(56) Documents cités:
- LIN CAI ET AL: "A QoS-aware AIMD protocol for time-sensitive applications in wired/wireless networks" INFOCOM 2005. 24TH ANNUAL JOINT CONFERENCE OF THE IEEE COMPUTER AND CO MMUNICATIONS SOCIETIES. PROCEEDINGS IEEE MIAMI, FL, USA 13-17 MARCH 2005, PISCATAWAY, NJ, USA,IEEE, vol. 3, 13 mars 2005 (2005-03-13), pages 2008-2019, XP010829307 ISBN: 978-0-7803-8968-7
- CAMPBELL A T ET AL: "Supporting service differentiation for real-time and best-effort traffic in stateless wireless ad hoc networks (SWAN)" IEEE TRANSACTIONS ON MOBILE COMPUTING, IEEE SERVICE CENTER, LOS ALAMITOS, CA, US, vol. 1, no. 3, 1 juillet 2002 (2002-07-01), pages 192-207, XP011095348 ISSN: 1536-1233
- KUN TAN ET AL: "Congestion control in multi-hop wireless networks" SENSOR AND AD HOC COMMUNICATIONS AND NETWORKS, 2005. IEEE SECON 2005. 2005 SECOND ANNUAL IEEE COMMUNICATIONS SOCIETY CONFERENCE ON SANTA CLARA, CA, USA 26-29 SEPT., 2005, PISCATAWAY, NJ, USA,IEEE, 26 septembre 2005 (2005-09-26), pages 96-106, XP010861990 ISBN: 978-0-7803-9011-9

## Description

L'invention concerne un procédé et un système permettant de transporter des données n'ayant pas de contraintes de délai et aussi des données pouvant être considérées comme prioritaires dans un réseau radio ad hoc. Elle est utilisée pour protéger les flux temps réels ou de priorité élevée par rapport à d'autres flux de données.
Le procédé de transport selon l'invention peut être adopté dans le cadre de réseaux ad hoc ou d'infrastructures domestiques afin de protéger la téléphonie VolP et les services IPTV (télévision IP) de plus en plus répandus. Il peut être mis en oeuvre dans les réseaux radio ad hoc mobiles, les réseaux radio maillé plus connus sous la désignation anglaise « mesh ».

Les réseaux ad hoc peuvent être composés d'entités communicantes sans-fils telles que des ordinateurs portables, des téléphones cellulaires ou encore des capteurs. Ces différentes entités constituent les noeuds d'un réseau ad hoc, dans lequel le réseau observe l'entrée et la sortie de ces entités. Dans ces réseaux, la communication n'est, en général, possible qu'entre les noeuds en portée radio. Un protocole de routage (par exemple le protocole OLSR (abréviation anglaise de Optimized Link State Routing protocol) ou AODV abrégé anglais de Ad Hoc On Demand Vector) assure alors le relayage des paquets IP pour permettre la connectivité de bout en bout. Les noeuds dans le réseau peuvent être mobiles ou non. Un exemple se trouve dans LIN CAI et al. "A QOS aware AIMD protocol for time sensitive application in wired /wireless networks" INFOCOM 2005, PROCEEDINGS IEEE MIAMI FL, USA, 13-15 MARCH 2005, IEEE vol 3 pages 2008-20019; XP010829307, ISBN: 978-0-7803-8968-7.
Obtenir de bonnes performances dans ce type de réseau est souvent difficile du fait de la forte variabilité et de la non prédictibilité des conditions radio et du fait que tous les noeuds se partagent le même médium ou support de communication. Dans un contexte où le réseau ad hoc doit supporter prioritairement du trafic temps réel comme de la voix sur IP, ce qui peut correspondre à une situation d'intervention d'urgence ou à un réseau tactique, le transport de données en utilisant les protocoles usuels, par exemple, le protocole TCP s'avère non efficace car nuisible au regard des flux temps-réels ou prioritaires ajoutant du délai et causant des pertes de paquets. En effet, les services temps réels génèrent un trafic généralement peu tolérant aux pertes de données ou de paquets et ils sont fortement affectés par des niveaux élevés de congestion IP ou de compétition pour l'accès au médium de communication, qu'engendre l'utilisation de protocoles tels que TCP.
L'une des problématiques du transport de données dans des réseaux ad hoc où les flux temps réels doivent être protégés, est de fournir un procédé permettant à une donnée ou un flux de données, d'être transmis d'une source à une destination sans dégrader les performances de flux critiques tels que les flux de voix sur IP ou VolP ou de « streaming video ».
Les problématiques liées aux réseaux ad hoc ont été étudiées par le groupe de recherche de l'IETF (abréviation anglaise de Internet Engineering Task Force) nommé MANET (Mobile Ad Hoc NETworks) disponible à partir du lien Internet : www.ietf.org/htlm.charters/manet-charter.htlm. Des solutions améliorant les performances de TCP dans les environnements ad hoc sans-fils ont été proposés [ATCP-Adhoc Transport Control Protocol] [SNOOP] [TCPF - Transport Control Protocol Feedback]. Ces solutions, opérant le plus souvent uniquement à la source, permettent d'améliorer les performances du transport des données dans les réseaux mobiles ad hoc, mais ne protègent pas les flux critiques comme ceux issus des services VolP. Par ailleurs, d'autres approches modifient le protocole TCP en utilisant des mécanismes de gestion de congestion « saut par saut » ou « bond par bond » (plus connu en anglais par « hop by hop »), décrit, par exemple, dans la publication de Y.Yi abd S.Shakkottai « Hop-by-Hop Congestion Control over a wireless Multi-hop Network » IEEE/ACM Transaction on Networking, June 2007. Les noeuds intermédiaires remontent des notifications à destination des noeuds précédents sur le chemin parcouru par le message. Ces approches permettent une adaptation de TCP plus précise et plus rapide mais ne traitent pas de la protection des flux temps réels. Aussi, les mécanismes de retransmission restent des mécanismes de bout en bout. D'autre part, les mécanismes de qualité de service QoS IP classiques tels que l'ordonnancement (en anglais scheduling) ou le formatage (shaping pour l'acronyme anglais) ne permettent pas de répondre au problème exposé ci-avant. Ces mécanismes ont une vision trop locale de l'environnement. En effet, un noeud n'a connaissance que de l'état de ses files d'attente. Les noeuds ne connaissent pas précisément le niveau de compétition pour transmettre des flux sur le médium et la nature du trafic circulant sur le médium.
D'autres solutions proposées par l'art antérieur mettent en oeuvre un transport de données de type «stockage et transmission ». Lorsqu'une entité reçoit un message, elle le conserve jusqu'à ce qu'elle le transmette à son tour à un noeud relais ou à la destination. L'information est transmise de manière atomique (transmise entièrement à chaque bond) et elle est, le plus souvent mais pas nécessairement auto-suffisante, ce qui est le cas par exemple, pour un mail, une vidéo, un document texte. Les noeuds intermédiaires ont donc une grande quantité de mémoire à disposition. Ces paradigmes de communications sont similaires à ceux définis dans l'architecture de l'Internet transportant les mails [SMTP] ou dans l'architecture de communication destinée aux réseaux tolérants aux délais [DTNRG]. Dans [OTT06], les auteurs montrent le potentiel d'un tel transport dans le cadre des réseaux ad hoc mobiles en termes de performances lorsque le transport à chaque saut s'effectue en utilisant UDP (User Datagram Protocol) à débit constant (CBR : Constant Bit Rate).
[OTT06] J. Ott, D. Kutscher, and C. Dwertmann, "Integrating DTN and MANET routing," in Proc. CHANTS, 2006.
[RFC821]-RFC 821 :-Simple-Mail-Transfer Protocol (SMTP). J. Postel.
[SNOOP] Hari Balakrishnan, Srinivasan Seshan, and Randy H. Katz, "Improving Reliable Transport and Handoff Performance in Cellular Wireless Networks," ACM Wireless Networks, 1995.
[TCPF] K. Chandran, S. Raghunathan, S. Venkatesan, and R. Prakash, "A feedback based scheme for improving TCP performance in Ad-Hoc wireless networks," in Proc. of the International Conference on Distributed Computing Systems (ICDCS'98), Amsterdam, Netherlands, May 1998.
[ATCP] J. Liu and S. Singh, "ATCP: TCP for mobile ad hoc networks," IEEE JSAC, vol. 19, no. 7, pp. 1300-1315, Jul. 2001.
L'inconvénient, par exemple, de la solution de transport décrite dans [OTT06] est qu'elle implique des transferts atomiques « saut par saut » entre la source et la destination et utilise un transport UDP CBR à chaque saut. Elle s'avère donc trop agressive pour les flux temps réels, et n'est pas robuste puisque aucun mécanisme de retransmission n'est prévu.

L'objet de la présente invention met en oeuvre une nouvelle approche dans laquelle l'information est transmise non pas sous la forme de paquets mais sous la forme de messages contenant de l'information pouvant être auto-suffisante qui est transférée d'entités en entités de manière atomique. L'invention concerne un procédé pour transporter des données dans un réseau sans-fil ad hoc, le réseau comprenant plusieurs noeuds dans une configuration à un instant donné, un noeud source, un noeud destinataire et plusieurs noeuds intermédiaires caractérisé en ce qu'il comporte au niveau de chacun des noeuds au moins les étapes suivantes :
découper le message M à transmettre en N paquet Pi,
un paquet Pi est donné aux couches (C₄, C₅) dudit noeud,
Tant qu'il reste des paquets Pi à transmettre,
Mesurer des paramètres indiquant la qualité des flux temps réels en transit sur ledit noeud,
Autoriser ou non la transmission desdits paquets Pᵢ en comparant les valeurs des paramètres mesurés à des valeurs seuils,
Si la transmission est autorisée, alors transmettre le paquet Pi à la couche MAC ou à la couche réseau.

Tant que le paquet n'a pas été envoyé par la couche réseau vers un autre noeud faisant partie de la route choisie, pour transmettre ce paquet vers le noeud destinataire :
mesurer les paramètres indiquant la qualité des flux temps réels en transit sur ledit noeud,
autoriser ou non la transmission en comparant lesdites valeurs des paramètres mesurés à des valeurs seuils.
Si la transmission n'est pas autorisée :
retirer Pi de la file d'attente de la couche MAC (si possible),
retourner au début de la boucle principale, c'est-à-dire l'étape où le procédé essaye de transmettre à nouveau ce paquet Pi,
vérifier que le paquet transmis a été bien reçu en utilisant un mécanisme d'acquittement et si le paquet est bien reçu passer au paquet suivant Pᵢ₊₁.

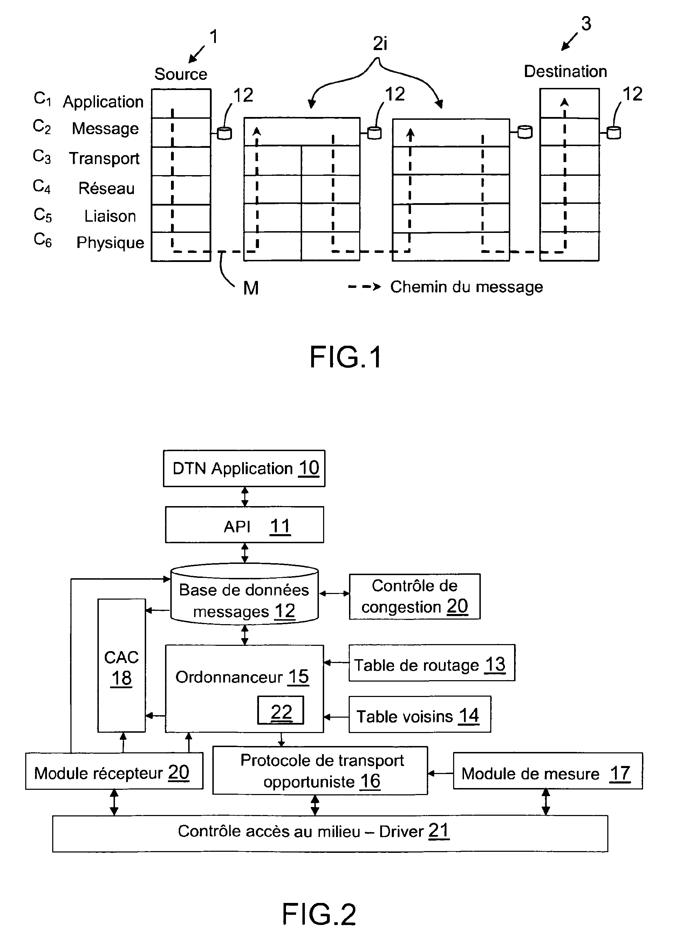

D'autres caractéristiques et avantages apparaîtront à la lecture de la description détaillée donnée à titre d'exemple et non limitative qui suit faite en regard de dessins annexés qui représentent :
o La figure 1, le principe du transport d'un message au sein de l'architecture décrite à la figure 2, et
o La figure 2, un exemple de structure de modules permettant l'exécution du procédé selon l'invention.

Afin de mieux faire comprendre l'objet de la présente invention, le procédé est décrit dans le cas d'une transmission de messages contenant de la voix sur IP considérée comme un flux de données prioritaire par rapport à d'autres types de données, telles que des données-de gestion ou encore de mise à jour de certaines bases de données dans le système.
Pour illustrer le procédé, dans le cas d'une application pour un réseau tactique, il est possible d'imaginer que le flux prioritaire sera celui d'un appel au secours, comparé à d'autres informations.

Le procédé peut être implémenté sous la forme d'un logiciel dans une pile protocolaire. Il peut aussi être mis en oeuvre sous la forme d'un logiciel embarqué.
Le réseau dans lequel est implémenté le procédé selon l'invention, décrit à la figure 1, est un réseau ad hoc comportant plusieurs noeuds mobiles qui font partie à un instant donné du réseau et qui peuvent en sortir. Le procédé est donc décentralisé, c'est-à-dire que, chaque noeud constituant le réseau à un instant donné comporte tous les moyens permettant l'émission d'un message, la réception d'informations, tel que l'acquittement d'un message reçu, ainsi que les modules détaillés à la figure 2 permettant l'exécution des étapes du procédé selon l'invention. Le procédé est exécuté saut par saut, c'est-à-dire que le ou les messages sont transmis au sein du réseau par un mécanisme connu sous l'acronyme anglais « hop by hop ». Les applications désirant transporter des données d'une source à une destination transmettent à la pile protocolaire donnée en exemple les messages. Ceux-ci sont alors transportés saut par saut le long d'une route déterminée par les tables de routage et les tables de voisins contenues dans les noeuds, comme il est explicité ci-après.
Sur la figure 1, est figurée l'image d'un réseau à un instant donné, comprenant un noeud source 1, plusieurs noeuds intermédiaires 2i, et un noeud destinataire 3.
Le noeud source 1 comprend une couche application C₁, une couche dans laquelle les messages à transmettre transitent C₂, une couche transport C₃, une couche réseau C₄, une couche liaison C₅ et une couche physique C₆. Ces couches sont connues de l'Homme du métier et ne seront pas détaillées dans la description.
Le noeud destination 3 comprend le même nombre de couches que le noeud source 1.
Les noeuds intermédiaires, ou noeuds relais, faisant partie du chemin parcouru par un message ne comportent pas de couche application, ou tout au moins, cette couche n'est pas utilisée.
La figure 2 représente les différents modules contenus dans un noeud du réseau permettant de traiter les messages qui ne sont pas considérés comme des messages prioritaires. Le module 10 ne génère que des messages non prioritaires. Les autres flux de données considérés dans l'application comme des flux prioritaires sont générés par d'autres applications et ne seront pas décrits car ils n'interviennent pas dans les étapes mises en oeuvre par le procédé selon l'invention.
Le module 10, application DTN, concerne les applications situées à la source (noeud source dans cet exemple) et à la destination des messages (noeud destinataire). Un module 10 génère et reçoit des messages M consistant en de l'information pouvant être auto-suffisante, comme des images ou des messages électroniques, mais pas nécessairement. Les messages M ont potentiellement, des tailles quelconques. Ces applications n'ont pas de contraintes temps réels.
10. Application DTN : Application générant des flux de données sans contrainte temps-réel.
11. API : Les applications transmettent et reçoivent les messages par l'intermédiaire de cette API (Application Programming Interface - désignation anglaise de Interface de Programmation).
12. Base de données des messages : Les noeuds du réseau utilisant le procédé sont munis d'une mémoire leur permettant de stocker les messages en transit, c'est-à-dire qui sont destinés à être ré-émis jusqu'à leur noeud destinataire. Cette base de donnée est remplie ou lue par les applications à l'aide de l'API précédente.
13. Table de routage : Cette table contient les routes indiquant quel noeud relais choisir, pour atteindre telle ou telle destination. Cette table est remplie par un protocole de routage pouvant être de type unicast IP (e.g., OLSR) ou de type DTN (e.g., ProPhet - Probabilistic Routing Protocol using History of Encounters and Transitivity) [LIN04]. Ces mécanismes sont connus de l'Homme du métier dans le domaine du routage et ne seront pas détaillés.
14. Table de voisinage : Cette table contient la liste des noeuds avec qui le noeud courant est en contact (e.g, en portée radio). De même, le procédé utilise des mécanismes classiques pour la table de voisinage.
15. Ordonnancement des transferts : Ce module permet de décider quel message doit à présent être transféré par le module de transfert opportuniste 16 décrit ci-après. Cette décision est prise en utilisant les informations fournies par les tables de routage et de voisinage ainsi que les d'éventuels mécanismes gérant les priorités entre les messages. Un noeud ne devrait être impliqué que dans un transfert de message à la fois, mais cette propriété n'est pas absolue.
16. Module de transmission opportuniste : Ce module est chargé du transport des messages d'un noeud à l'autre. Il opère un découpage du message à transmettre en paquets (par exemple, il peut découper le message en plusieurs paquets IP). C'est lui qui prend la décision à chaque instant, de donner ou non le prochain paquet en attente à la couche MAC en fonction des informations retournées par le module de mesure 8. Ce module comprend un compteur 22 permettant de suivre le nombre de paquets Pi transmis.
17. Module de mesure : Ce module retourne au module de transmission opportuniste 16 les valeurs de paramètres mesurés localement ou dans le voisinage. Par exemple, les paramètres mesurés peuvent être la gigue moyenne et le taux de perte moyen des flux temps-réels en transit dans la zone de couverture radio du noeud ou tout autre paramètre qu'un Homme du métier considère comme étant utile pour décider de la transmission des données. Ainsi, le module de transmission opportuniste 16 est adapté à évaluer si les envois de paquets qu'il est sur le point de générer vont engendrer de la compétition pouvant dégrader les flux temps réels. La décision d'envoi ou non du prochain paquet par le module de transfert opportuniste 16 peut être prise par exemple en utilisant des seuils sur les valeurs des paramètres mesurés par le présent module de mesure 17.

De manière générale, les mesures que ce module effectue, peuvent intégrer des informations locales par exemple des statistiques retournées par le « driver » 21 concernant les transmissions ayant été effectuées dans un passé proche, informations concernant les flux temps réels en transit sur le noeud courant) ou provenant du voisinage (e.g., les flux temps réels échangés dans le voisinage, statistiques concernant les interfaces airs des noeuds voisins obtenues par un protocole de « beaconing »). Le module de mesure peut se baser sur l'état d'encombrement des artères du réseau ou des artères en liaison avec le noeud considéré.
18. CAC : Ce module décide si le noeud courant est en capacité d'accepter un transfert entrant de message. Cette décision est prise en prenant en compte des informations concernant la taille de la base de données 12, les éventuels transferts ayant été ordonnancés par 14 ou des informations concernant l'état du noeud (e.g., énergie).
19. Module de réception : Ce module assure la réception des messages de donnée. Il peut retourner ou non des accusés réception ou en anglais *« acknowlegements »* au noeud émetteur (e.g., ACK, SACK - Selective ACKnowledgement). Une fois le message reçu en entier, ce module de réception le stocke dans la base de donnée des messages 12.
20. Contrôle de congestion : Ce module optionnel permet d'échanger des messages entre les noeuds participant aux transferts afin d'assurer un control de congestion de bout en bout ou de manière globale dans le réseau.
21. Couche MAC : Ce module représente la couche d'accès au médium. Cette couche est spécifique à chaque type d'interface radio. Elle est capable de fournir des statistiques au module de mesure 17 et est capable de transmettre et recevoir des paquets sur l'interface air.
22. Compteur : Ce module représente le compteur utilisé lors de la transmission d'un message par le protocole de transport (16).

[LIN04] Lindgren A., Doria A., Schelén O. Probabilistic Routing in Intermittently Connected Networks. LNCS, Vol. 3126. 2004.

Le procédé mis en oeuvre par la présente invention comporte, par exemple, les étapes suivantes :
L'application 10 ayant généré un message, ce dernier est transmis à l'application 11 qui sert d'interface à la base de données 12 dans laquelle les messages à transmettre sont mémorisés. Les messages sont ensuite récupérés par l'ordonnanceur 15 qui est en charge de planifier leur transfert. Cette planification s'effectue en utilisant les informations en provenance de la table de routage 13 indiquant la ou les routes disponibles pour transmettre le ou les messages et aussi des informations en provenance de la table contenant les noeuds voisins 14 indiquant si le noeud suivant sur les routes est disponible ou non. L'ordonnanceur peut aussi recevoir un message d'acquittement ou de bonne réception provenant du module de réception 19. Une fois reçu le message d'acquittement, le message qui a été correctement transmis et donc remis à son destinataire, peut être éliminé de la base de données.
Les messages en provenance de l'ordonnanceur 15 sont ensuite transmis vers le module de transfert opportuniste 16 qui se charge du transfert du message sur le prochain saut. Pour cela, il utilise les mesures effectuées par le module de mesure 17 qui prend en compte des paramètres mesurés dans le voisinage radio concernant les flux temps réels que l'on désire protéger.

L'algorithme distribué de décision d'envoi des messages dans le cadre du protocole de transport opportuniste 16 comprend les étapes décrites ci-après. Il est mis en oeuvre au niveau de chaque noeud constituant un réseau à un instant donné.
La route utitisée pour transmettre un message est déterminée à partir des informations contenues dans la table de routage et dans la table donnant les plus proches voisins en utilisant un mécanisme ou des techniques connus de l'Homme du métier.

Le message généré par l'application 10 est mis dans une file d'attente principale au niveau d'un noeud.
Une première étape consiste à fractionner le message M en N paquets Pi. Le nombre N est connu au départ. Il est possible d'utiliser un compteur initialisé à 0 ou à N selon que l'on choisit d'incrémenter ce compteur ou de le décrémenter, à chaque fois que l'on transmet un paquet Pi.
Un paquet Pi est donné à la couche réseau ou à la couche MAC (Medium Access Control désignation anglaise de Contrôle d'Accés au Médium).
Tant qu'il reste des paquets Pi à transmettre :
Vérifier si les paramètres retournés par le module de mesure 17 au module de protocole opportuniste 16 indiquent qu'un transfert peut se faire sans dégrader les flux temps réels avoisinant,
   Si oui, alors transmettre le paquet Pi à la couche MAC ou à la couche réseau,
      Tant que le paquet Pi n'a pas été envoyé par la couche MAC ou la couche réseau vers un autre noeud 2j faisant partie de la route choisie, pour transmettre ce paquet vers le noeud destinataire,
      Si le moment n'est plus opportun pour une transmission de données (décision prise par le module de mesure et transmise au module de transport opportuniste qui remarque des paramètres qui ont évolué de manière défavorable à la transmission), alors :
         √ retirer le paquet Pi de la file d'attente de la couche MAC,
         √ activer un mécanisme adaptatif de temps d'attente, par exemple un mécanisme de Back off (e.g. AIMD - Additive Increase—Multiplicative Decrease), cette étape étant facultative,
         √ retourner au début de la boucle principale, c'est-à-dire que le procédé essaye de transmettre à nouveau ce paquet Pi , il vérifie si le moment est opportun pour transmettre le paquet Pi,
   Vérifier que le paquet a bien été reçu. Ceci peut se faire en utilisant les informations fournies par la couche MAC ou en implémentant un mécanisme d'acquittement dans le module de réception d'un noeud. D'autres mécanismes d'acquittement peuvent être utilisés comme le mécanisme d'accusé de réception sélectif connu sous l'abréviation anglaise SACK (Selective ACKnowledgement). Si le paquet a bien été recu, on incrémente alors un compteur 22 associé à Pi de 1, on passe au paquet Pᵢ₊₁.
Attendre un temps aléatoire, constant ou calculer sur un autre mécanisme comme AIMD par exemple, cette étape étant facultative.

Pour chaque paquet Pi à transmettre, le protocole de transfert opportuniste 16 attend que le module de mesure 17 lui indique une bonne opportunité. Dès que les conditions sont favorables, le protocole opportuniste transmet le paquet à la couche MAC. Dans le cas où l'envoi n'a pu être réalisé par la couche MAC, le processus est réitéré, on essaye de retransmettre le même paquet Pi avant de transmettre le paquet suivant dans la file d'attente Pi+1. Par ailleurs, lorsque le paquet est mis en attente au niveau de la couche MAC et que les conditions de transmission deviennent défavorables, un mécanisme de « Back Off » peut alors être utilisé pour réitérer l'essai de transmission, par exemple, après des périodes de temps croissants linéairement. Pour cela, il est possible d'utiliser l'algorithme AIMD (Additive Increase Multiplicative Decrease) qui présente comme particularité de conserver en mémoire le contexte, s'il y a échec dans la transmission du paquet, on attend ; en cas de succès il y a diminution du temps d'attente. Il est aussi possible de mettre en oeuvre toute autre solution connue de l'Homme du métier. Enfin, après chaque succès ou échec, un temps d'attente constant peut être mis en place.

Le module de transfert opportuniste gère et décrète les instants de transmission et les attentes.
Le temps d'attente peut être aléatoire dans le cas où il n'y a pas de coordination entre les noeuds. Dans d'autres cas, ce temps est nul et l'essai pour retransmettre un paquet est quasi-immédiat.

L'invention permet donc de transporter de l'information stockée sous la forme de message d'une source à une destination tout en protégeant les trafics temps réels comme ceux issus de la voix sur IP.

## Revendications

1. Procédé pour transporter des données dans un réseau sans-fil ad hoc, le réseau comprenant plusieurs noeuds dans une configuration à un instant donné, un noeud source (1), un noeud destinataire (3) et plusieurs noeuds intermédiaires (2i) **caractérisé en ce qu'**il comporte au niveau de chacun des noeuds au moins les étapes suivantes :
découper le message M à transmettre en N paquets Pi,
un paquet Pi est donné aux couches (C₄, C₅) dudit noeud (2i),
Tant qu'il reste des paquets Pi à transmettre :
mesurer les paramètres indiquant la qualité des flux temps réels en transit sur ledit noeud (2i),
autoriser ou non la transmission desdits paquets Pi en comparant les valeurs des paramètres mesurés à des valeurs seuils (16, 17).
Si la transmission est autorisée, alors transmettre un, desdits paquets Pi, à la couche Medium Access Control, abrégé par la suite par MAC, ou à la couche réseau.
Tant que le paquet Pi n'a pas été envoyé par la couche réseau vers un autre noeud faisant partie de la route choisie, pour transmettre ce paquet vers le noeud destinataire,
mesurer les paramètres indiquant la qualité des flux temps réels en transit sur ledit noeud (2i),
autoriser ou non la transmission en comparant lesdites valeurs des paramètres mesurés à des valeurs seuils (16, 17),
Si la transmission n'est pas autorisée :
retirer Pi de la file d'attente de la couche MAC (si possible),
retourner au début de la boucle principale, c'est-à-dire l'étape où le procédé essaye de transmettre à nouveau ce paquet Pi,
Vérifier que ledit paquet Pi transmis a été bien reçu en utilisant un mécanisme d'acquittement et si le paquet a bien été reçu, passer au paquet suivant Pᵢ₊₁.

2. Procédé selon la revendication 1, **caractérisé en ce qu'**entre deux essais pour transmettre un paquet Pi, le procédé applique un délai d'attente constant ou variable.

3. Procédé selon la revendication 1, **caractérisé en ce qu'**après avoir retiré le paquet de la file d'attente, le procédé active un mécanisme de temps d'attente.

4. Procédé selon la revendication 3, **caractérisé en ce que** le mécanisme de temps d'attente est un mécanisme de Back Off de type Additive Increase Multiplicative Decrease, AIMD.

5. Dispositif permettant de transporter des flux de données dans un réseau comprenant plusieurs noeuds dans une configuration donnée à un instant donné et disposant des moyens pour éxécuter les étapes du procédé selon l'une des revendication 1 à 4, **caractérisé en ce qu'**il comporte en combinaison au moins les éléments suivants :
√ Une base de données (12) stockant le ou les messages à transmettre,
√ Un module de contrôle de congestion (20) relié à ladite base de données,
√ Un ordonnanceur ayant pour entrées les messages stockés dans la base de données, la route déterminée pour un message par une table de routage (13) et une table des noeuds voisins (14), et une information issue d'un module récepteur (19),
√ Un module comprenant un protocole de transport opportuniste (16) recevant des informations de l'ordonnanceur (15) et d'un module de mesure (17), ledit protocole de transport opportuniste étant adapté à découper un message à transmettre en N paquets Pi, et transmettant lesdits paquets à la couche réseau dudit noeud, ledit module comportant un compteur (22),
√ Un module (18) adapté à décider si le noeud courant est en capacité d'accepter un transfert entrant de message.

6. Dispositif selon la revendication 5, **caractérisé en ce que** le module de mesure (17) est adapté à mesurer des valeurs de paramètres mesurés localement et/ou dans le voisinage d'un noeud.

7. Dispositif selon la revendication 6, **caractérisé en ce que** les paramètres mesurés sont la gigue moyenne et le taux de perte moyen des flux temps-réels en transit dans la zone de couverture dudit noeud.

8. Dispositif selon la revendication 5, **caractérisé en ce que** le réseau est un réseau ad-hoc.

## Claims

1. A method for transporting data in a wireless ad-hoc network, said network comprising several nodes in a configuration at a given instant, a source node (1), a destination node (3) and several intermediate nodes (2i), **characterised in that** at each of said nodes it comprises at least the following steps:
- dividing the message M to be transmitted into N packets Pi,
one packet Pi is given to layers (C₄, C₅) of said node (2i),
As long as packets Pi remain to be transmitted:
- measuring the parameters that indicate the quality of the real-time streams in transit on said node (2i),
- authorising or not authorising the transmission of said packets Pi by comparing the values of the measured parameters with threshold values (16, 17),
- transmitting one of said packets Pi, if the transmission is authorised, to the Medium Access Control (MAC) layer or to the network layer,
As long as the packet Pi has not been sent by the network layer to another node that forms part of the selected route, in order to transmit said packet to the destination node:
- measuring the parameters that indicate the quality of the real-time streams in transit on said node (2i),
- authorising or not authorising the transmission by comparing said values of the measured parameters with threshold values (16, 17),
if the transmission is not authorised:
- removing Pi from the queue of the MAC layer (if possible),
- returning to the start of the main loop, that is the step in which the method attempts to retransmit said packet Pi,
Verifying that said transmitted packet Pi has been properly received by using an applicable acknowledgement mechanism and, if the packet has been properly received, moving to the next packet Pᵢ₊₁.

2. The method according to claim 1, **characterised in that** between two attempts for transmitting one packet Pi the method applies a constant or variable wait delay.

3. The method according to claim 1, **characterised in that** after having removed the packet from the queue the method activates a wait time mechanism.

4. The method according to claim 3, **characterised in that** the wait time mechanism is an Additive Increase Multiplicative Decrease (AIMD) type Back Off mechanism.

5. A device for transporting data streams in a network comprising a plurality of nodes in a given configuration at a given instant and having means for executing the steps of the method according to any one of claims 1 to 4, **characterised in that** it comprises in combination at least the following elements:
- a database (12) storing the message(s) to be transmitted,
- a module for controlling congestion (20) connected to said database,
- a sequencer having as inputs the messages stored in the database, the route determined for a message by a routing table (13) and a table of neighbouring nodes (14) and information coming from a receiving module (19),
- a module comprising an opportunistic transport protocol (16) receiving information from the scheduler (15) and a measuring module (17), said opportunistic transport protocol being designed to divide a message to be transmitted into N packets Pi, and transmitting said packets to the network layer of said node, said module comprising a counter (22),
- a module (18) designed to decide if the current node is capable of accepting an incoming message transfer.

6. The device according to claim 5, **characterised in that** the measuring module (17) is designed to measure the values of parameters that are measured locally and/or in the vicinity of a node.

7. The device according to claim 6, **characterised in that** the measured parameters are the average jitter and the average loss rate of the real-time streams in transit in the coverage area of said node.

8. The device according to claim 5, **characterised in that** the network is an ad-hoc network.

## Patentansprüche

1. Verfahren zum Transportieren von Daten in einem drahtlosen Ad-hoc-Netzwerk, wobei das Netzwerk mehrere Knoten in einer Konfiguration in einem gegebenen Augenblick, einen Ursprungsknoten (1), einen Zielknoten (3) und mehrere Zwischenknoten (2i) umfasst, **dadurch gekennzeichnet, dass** es an jedem der Knoten wenigstens die folgenden Schritte beinhaltet:
- Unterteilen der zu übertragenden Nachricht M in N Pakete Pi,
wobei ein Paket Pi zu den Schichten (C₄, C₅) des Knotens (2i) gegeben wird, Solange zu übertragende Pakete Pi verbleiben:
- Messen der Parameter, die die Qualität von Echtzeitflüssen im Transit auf dem Knoten (2i) anzeigen,
- Autorisieren oder Nichtautorisieren der Übertragung der Pakete Pi durch Vergleichen der Werte der gemessenen Parameter mit Schwellenwerten (16, 17);
Übertragen, wenn die Übertragung autorisiert wird, eines der Pakete Pi zur MAC-(Media Access Control)-Schicht oder zur Netzwerkschicht;
Solange das Paket Pi nicht von der Netzwerkschicht zu einem anderen Knoten übertragen wurde, der Teil der gewählten Route ist, zum Übertragen dieses Pakets zum Zielknoten:
- Messen der Parameter, die die Qualität des Echtzeitflusses im Transit auf dem Knoten (2i) anzeigen,
- Autorisieren oder Nichtautorisieren der Übertragung durch Vergleichen der Werte der gemessenen Parameter mit den Schwellenwerten (16, 17),
wenn die Übertragung nicht autorisiert wird:
- Herausnehmen von Pi aus der Warteschlange der MAC-Schicht (falls möglich),
- Zurückkehren zum Anfang der Hauptschleife, d.h. zu dem Schritt, in dem das Verfahren das Übertragen dieses Pakets Pi erneut versucht,
Prüfen mittels eines Bestätigungsmechanismus, ob das gesendete Paket Pi ordnungsgemäß empfangen wurde, und wenn das Paket ordnungsgemäß empfangen wurde, Weitergehen zum nächsten Paket Pᵢ₊₁.

2. Verfahren nach Anspruch 1, **dadurch gekennzeichnet, dass** zwischen zwei Versuchen zum Übertragen eines Pakets Pi das Verfahren eine konstante oder variable Warteverzögerung anwendet.

3. Verfahren nach Anspruch 1, **dadurch gekennzeichnet, dass** das Verfahren nach dem Herausnehmen des Pakets aus der Warteschlange einen Wartezeitmechanismus aktiviert.

4. Verfahren nach Anspruch 3, **dadurch gekennzeichnet, dass** der Wartezeitmechanismus ein Back-Off-Mechanismus des AIMD-(Additive Increase Multiplicative Decrease)-Typs ist.

5. Vorrichtung für den Transport von Datenflüssen in einem Netzwerk, das mehrere Knoten in einer gegebenen Konfiguration in einem gegebenen Augenblick umfasst und über die Mittel zum Ausführen der Schritte des Verfahrens nach einem der Ansprüche 1 bis 4 verfügt, **dadurch gekennzeichnet, dass** sie in Kombination wenigstens die folgenden Elemente umfasst:
- eine Datenbank (12), die die zu übertragende(n) Nachricht(en) speichert,
- ein Überfüllungssteuermodul (20), das mit der Datenbank verbunden ist,
- einen Sequenzierer, in den die in der Datenbank gespeicherten Nachrichten, die für eine Nachricht durch eine Leitwegtabelle (13) und eine Nachbarknotentabelle (14) bestimmte Route und eine von einem Empfängermodul (19) kommende Information eingegeben werden,
- ein Modul, das ein opportunistisches Transportprotokoll (16) umfasst, das Informationen von dem Sequenzierer (15) und von einem Messmodul (17) empfängt, wobei das opportunistische Transportprotokoll daran angepasst ist, eine zu übertragende Nachricht in N Pakete Pi zu unterteilen und die Pakete zur Netzwerkschicht des Knotens zu übertragen, wobei das Modul einen Zähler (22) umfasst,
- ein Modul (18) zum Entscheiden, ob der aktuelle Knoten eine eingehende Nachrichtenübertragung akzeptieren kann.

6. Vorrichtung nach Anspruch 5, **dadurch gekennzeichnet, dass** das Messmodul (17) die Aufgabe hat, Werte von gemessenen Parametern lokal und/oder in der Nähe eines Knotens zu messen.

7. Vorrichtung nach Anspruch 6, **dadurch gekennzeichnet, dass** die gemessenen Parameter durchschnittliches Jittern und die mittlere Verlustrate von Echtzeitflüssen im Transit in der Öffnungszone des Knotens sind.

8. Vorrichtung nach Anspruch 5, **dadurch gekennzeichnet, dass** das Netzwerk ein Ad-hoc-Netzwerk ist.
